# EUROPÄISCHE PATENTSCHRIFT

(11) **EP 3 137 343 B1**
(45) Veröffentlichungstag und Bekanntmachung des Hinweises auf die Patenterteilung: **13.09.2017**
(21) Anmeldenummer: 15712593.1
(22) Anmeldetag: 23.03.2015
(51) Int. Cl.: B60R 16/03

(54) **VORRICHTUNG UND ZUM VERBINDEN EINES BASIS-BORDNETZES MIT EINEM INSBESONDERE SICHERHEITSRELEVANTEN TEILNETZ**
DEVICE FOR CONNECTING A BASE ON-BOARD POWER SUPPLY TO A, IN PARTICULAR SAFETY-RELATED, SUB-NETWORK
DISPOSITIF DE CONNEXION D'UN RÉSEAU EMBARQUÉ DE BASE COMPRENANT UNE PARTIE DE RÉSEAU EN PARTICULIER INTÉRESSANT LA SÉCURITÉ

(30) Priorität: 30.04.2014 DE 102014208192
(43) Veröffentlichungstag der Anmeldung: 08.03.2017
(73) Patentinhaber: Robert Bosch GmbH, 70442 Stuttgart (DE)
(72) Erfinder: MUELLER, Wolfgang, 70439 Stuttgart (DE); BOHNE, Christian, 70437 Stuttgart (DE)
(86) Internationale Anmeldenummer: PCT/EP2015/056053
(87) Internationale Veröffentlichungsnummer: WO 2015/165644

(56) Entgegenhaltungen:
- WO-A1-2004/006422
- DE-B3- 10 258 894

## Beschreibung

Die Erfindung geht aus von einer Vorrichtung zum Verbinden eines Basis-Bordnetzes mit einem insbesondere sicherheitsrelevanten Teilnetz nach der Gattung der unabhängigen Ansprüche. Eine gattungsgemäße Vorrichtung ist bereits aus der WO 2002/080334 A1 bekannt. So sind in einem Ausführungsbeispiel mit einem integrierten Startergenerator eine 36V-Batterie, eine 12V-Batterie sowie ein Doppelschichtkondensator vorgesehen. Der integrierte Starter-Generator versorgt über die Verbindung das 42V-Bordnetz und über einen 42/14V-Konverter das 14V-Netz. An den Netzen sind Verbraucher angeschlossen. Der Doppelschichtkondensator kann über Schalter mit dem integrierten Starter-Generator und dem 42V-Bordnetz verbunden werden. Allerdings wird der Doppelschicht-Kondensator nur über geringe Spannungsbereiche eingesetzt.

Es ist Aufgabe der vorliegenden Erfindung, eine Vorrichtung und ein Verfahren anzugeben, um insbesondere ein sicherheitsrelevantes Teilnetz zuverlässig mit elektrischer Energie zu versorgen. Diese Aufgabe wird gelöst durch die Merkmale der unabhängigen Ansprüche.

### Vorteile der Erfindung

Die erfindungsgemäße Vorrichtung und das erfindungsgemäße Verfahren gemäß den Merkmalen der unabhängigen Ansprüche haben dem gegenüber den Vorteil, dass eine zuverlässige Versorgung insbesondere eines sicherheitsrelevanten Teilbordnetzes erfolgt. Dadurch, dass zumindest ein erstes und ein zweites Schaltmittel vorgesehen sind, über die sich das Basis-Bordnetz und das Teilnetz unmittelbar koppeln lassen sowie durch das Vorsehen eines Gleichspannungswandlers, über den ein Energiespeicher gegebenenfalls hinsichtlich dessen Spannungslage anzupassen ist, können zuverlässig sicherheitselektrische Verbraucher sicher versorgt werden. Bevorzugt werden hierzu Verbraucher in Verbrauchergruppen mit unterschiedlicher Sicherheitsrelevanz eingeteilt. Die Erfindung kann zur elektrischen Versorgung von Kraftfahrzeugen eingesetzt werden. Weiterhin ist auch der Einsatz in anderen Technikbereichen möglich, in denen elektrische Verbraucher mit hoher Zuverlässigkeit versorgt werden müssen. Zudem sorgt die Erfindung dafür, dass elektrische Speicher mit verschiedenen Spannungslagen, wie beispielsweise Doppelschichtkondensatoren innerhalb eines Bordnetzes betrieben werden können. Außerdem verhindern erfindungsgemäße Vorrichtung und erfindungsgemäßes Verfahren, dass sicherheitsrelevante und spannungssensitive Verbraucher durch einen Spannungseinbruch in ihrer Funktion beeinflusst werden. Die erfindungsgemäße Vorrichtung und das erfindungsgemäße Verfahren zeichnen sich darüber hinaus insbesondere dadurch aus, dass eine zweikanalige, elektrische Versorgung für redundante, sicherheitsrelevante Verbraucher möglich wird. Ebenfalls kann eine fehlertolerante Versorgung für sicherheitsrelevante Verbraucher erfolgen, die nur einfach vorhanden sind. Die Konfigurierbarkeit der elektrischen Versorgung im Fehlerfall ist möglich.

Die Anordnung zeichnet sich durch eine hohe Flexibilität aus. Unterschiedlichste Betriebszustände lassen sich optimieren. So können Verbraucher oder Verbrauchergruppen im Fehlerfall abgekoppelt werden. Weiterhin ist es möglich, dass verschiedene elektrische Energiespeicher in einem Bordnetz über eine galvanische Trennung betrieben werden können. Außerdem kann eine Kompensation von Spannungseinbrüchen bei spannungssensitiven Verbrauchern erfolgen. Die Bordnetzstützung beim Betrieb von Hochlastverbrauchern mit hoher Stromdynamik ist außerdem gewährleistet. Ein skalierbarer und modularer Aufbau der Vorrichtung trägt zu Kostensenkungen bei. Weiterhin kann die Vorrichtung als Sonderausstattung insbesondere in einem Fahrzeug implementiert werden.

In zweckmäßigen Weiterbildungen sind unterschiedliche Betriebsweisen der Vorrichtung möglich. Dadurch werden weitere Zusatzfunktionen generiert. So kann die Vorrichtung beispielsweise bei geeigneter Ansteuerung das Speichermanagement des Energiespeichers, beispielsweise ein Doppelschicht-Kondensator, übernehmen. Dieser Energiespeicher kann mit Hilfe der Vorrichtung unabhängig von der Generatorspannung oder der Spannung des Energiespeichers des Basis-Bordnetzes geladen oder entladen werden.

In einer zweckmäßigen Weiterbildung stellt die entsprechende Ansteuerung sicher, dass entweder nur das Basis-Bordnetz oder nur das Teilnetz oder aber das gesamte Fahrzeug-Bordnetz zur Verhinderung eines Spannungseinbruchs beispielsweise während des Startvorgangs gestützt werden können.

In einer zweckmäßigen Weiterbildung ist vorgesehen, dass eine Abkopplung des sicherheitsrelevanten Teilnetzes vom Basis-Bordnetz erfolgt und die Versorgung aus dem Energiespeicher sichergestellt wird. Dies erhöht die Sicherheit im Fehlerfall.

In einer zweckmäßigen Weiterbildung ist vorgesehen, dass bei einer entsprechenden Ansteuerung die Abkopplung des Teilnetzes und die Stützung des Basis-Bordnetzes aus dem Energiespeicher erfolgen können. Dies kann insbesondere dann notwendig werden, wenn bei einem Verbraucher in Kurzschluss aufgetreten ist.

In einer zweckmäßigen Weiterbildung ist vorgesehen, dass der Energiespeicher vom sicherheitsrelevanten Teilnetz abgekoppelt wird und die Versorgung des sicherheitsrelevanten Teilnetzes aus dem Basis-Bordnetz über eine direkte galvanische Kopplung erfolgen kann. Dadurch erhöht sich weiter die Sicherheit der Anordnung.

In einer zweckmäßigen Weiterbildung ist vorgesehen, dass die Versorgung des sicherheitsrelevanten Teilnetzes aus dem Basis-Bordnetz über den Gleichspannungswandler zur Spannungsanpassung erfolgen kann. Damit werden spannungskritische Verbraucher in besonders geeigneter Art und Weise versorgt.

In einer zweckmäßigen Weiterbildung ist vorgesehen, dass das gesamte Bordnetz aus dem Energiespeicher gestützt wird ohne Verwendung eines Gleichspannungswandlers. Dies trägt ebenfalls zur Erhöhung der Verfügbarkeit des Gesamtbordnetzes bei.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung zum Verbinden eines Basis-Bordnetzes mit einem sicherheitsrelevanten Teilnetz ist in der Zeichnung dargestellt und wird nachfolgend näher erläutert. Es zeigen:
- Figur 1: ein Blockschaltbild der beispielhaften Ausgestaltung des Basis-Bordnetzes, welches durch ein Multifunktionsmodul mit dem sicherheitsrelevanten Teilnetz verbunden ist mit der entsprechenden Ansteuerung der Verbraucher,
- Figur 2: das Multifunktionsmodul in einem Zustand, in dem der Energiespeicher aufgeladen wird und das Teilnetz direkt mit dem Basis-Bordnetz gekoppelt ist,
- Figur 3: das Multifunktionsmodul in einem Zustand, in dem es das Basis-Bordnetz und das Teilnetz aus dem Energiespeicher stützt,
- Figur 4: das Multifunktionsmodul in einem Zustand, in dem es die Versorgung des Teilnetzes nur aus dem Energiespeicher sicherstellt,
- Figur 5: das Multifunktionsmodul in einem Zustand, in dem das Teilnetz abgekoppelt ist und das Basis-Bordnetz durch den Energiespeicher gestützt wird,
- Figur 6: das Multifunktionsmodul in einem Zustand, in dem das Teilnetz abgekoppelt ist und der Energiespeicher aus dem Basis-Bordnetz aufgeladen wird,
- Figur 7: das Multifunktionsmodul in einem Zustand, in dem es das Teilnetz nur aus dem Basis-Bordnetz stützt,
- Figur 8: das Multifunktionsmodul in einem Zustand, in dem es das Basis-Bordnetz direkt mit dem Energiespeicher stützt,
- Figur 9: das Multifunktionsmodul in einem Zustand, in dem das Basis-Bordnetz und das Teilnetz direkt mit dem Energiespeicher gestützt werden,
- Figur 10: das Multifunktionsmodul in einem Zustand, in dem sie das Teilnetz nur aus dem Basis-Bordnetz stützt, sowie
- Figur 11: ein Blockschaltbild einer alternativen Ausgestaltung der Topologie nach Figur 1, wobei das Basis-Bordnetz mit einem Hochvolt-Bordnetz gekoppelt ist.

Ein Basis-Bordnetz 10 umfasst zumindest einen Starter 12, einen Generator 14, einen Energiespeicher 16 sowie beispielhaft angedeutet einen Verbraucher 18, welcher als sogenannter Komfort-Verbraucher ausgeführt ist. Starter 12, Generator 14, Energiespeicher 16 und Verbraucher 18 sind jeweils parallel zueinander gegen Masse geschaltet. Diese Komponenten sind Bestandteil eines Basis-Bordnetzes 10, welches beispielsweise im Kraftfahrzeug bei 14V betrieben wird. Sicherheitsrelevante Verbraucher 22, 24 werden in geeigneter Art und Weise wie nachfolgend beschrieben in einem sicherheitsrelevanten Teilnetz 20 so verschaltet, dass zuverlässig auch im Fehlerfall eine Energiezufuhr für sicherheitsrelevante Verbraucher 22, 24 erfolgt. Das sicherheitsrelevante Teilnetz 20 lässt sich unterteilen in ein erstes sicherheitsrelevantes Teilnetz 20a, das aus dem Multifunktionsmodul 30 über einen zweiten Pfad 23 gespeist wird und über ein Schaltmittel 26 vom Basisbordnetz 10 abkoppelbar ist. Ein zweites sicherheitsrelevantes Teilnetz 20b als weiterer Bestandteil des sicherheitsrelevanten Teilnetzes 20b ist über einen ersten Pfad 21 unmittelbar mit dem Basis-Bordnetz 10 verbunden. Besonders wesentliche Verbraucher 22 werden redundant ausgelegt. Die redundanten Verbraucher 22a, 22b sind jeweils gegen Masse verschaltet. Der redundante Verbraucher 22b wird über den ersten Pfad 21 unmittelbar von dem Basis-Bordnetz 10 versorgt und ist Bestandteil des zweiten sicherheitsrelevanten Teilnetzes 20b. Der andere redundante Verbraucher 22a als Bestandteil des sicherheitsrelevanten Teilnetzes 20 wird über ein Multifunktionsmodul 30 versorgt. Das Multifunktionsmodul 30 ist über einen Verbindungspfad 11 mit dem Basis-Bordnetz 10 verbunden. Das sicherheitsrelevante Teilnetz 20a ist über den zweiten Pfad 23 mit dem Multifunktionsmodul 30 verbunden. Weiterhin ist ein fehlertolerant zu versorgender Verbraucher 24 in dem Teilnetz 20 vorgesehen, der jedoch nicht redundant ausgelegt ist. Eine geeignete Anordnung der Schaltmittel 26, 28 stellt sicher, dass sowohl der fehlertolerant zu versorgende Verbraucher 24 wie auch der erste redundante Verbraucher 22a sowohl über das Basis-Bordnetz 10 als auch durch das Multifunktionsmodul 30 versorgt werden können. Hierzu kann das Schaltmittel 28 den fehlertolerant zu versorgenden Verbraucher 24 mit dem Ausgang des Multifunktionsmoduls 30 verbinden. Das weitere Schaltmittel 26 ist zwischen dem ersten Pfad 21 und dem gemeinsamen Potential von Schaltmittel 28 und fehlertolerant zu versorgenden Verbraucher 24 angeordnet. Ein Anschluss des Multifunktionsmoduls 30 liegt über dem Verbindungspfad 11 auf dem Potential des Basis-Bordnetzes 10, also beispielsweise bei 14V. In dem Multifunktionsmodul 30 ist ein Gleichspannungswandler 33 angeordnet. Der Gleichspannungswandler 32 ist bevorzugt als 3-Wege-Gleichspannungswandler ausgeführt. Ein dritter Ausgang ist verbunden mit einem weiteren Energiespeicher 40. Der Energiespeicher 40 ist gegen Masse verschaltet. Als Energiespeicher 40 kommt beispielsweise ein Doppelschicht-Kondensator oder eine Batterie mit einem geeigneten Spannungsverhalten zum Einsatz.

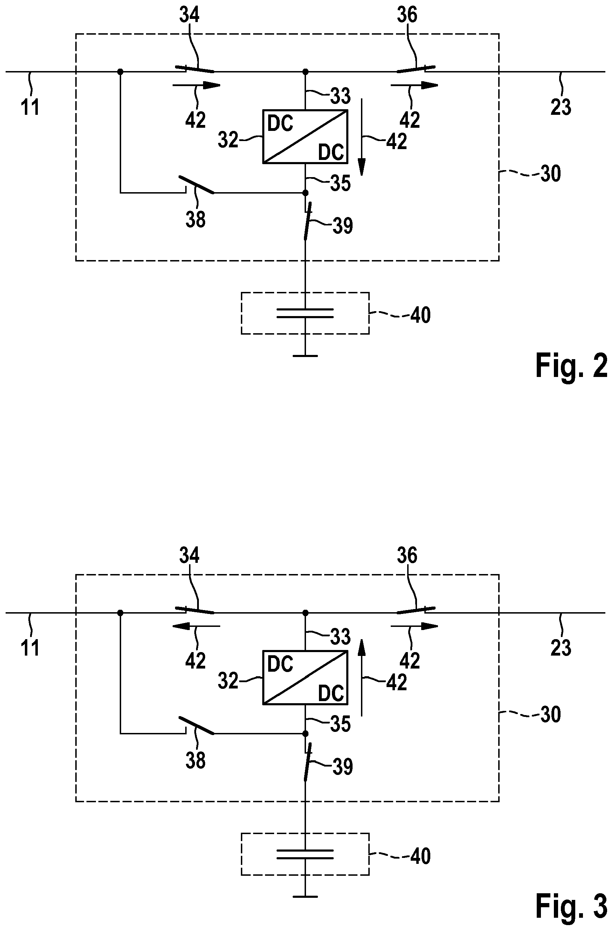

In der Figur 2 ist der Aufbau des Multifunktionsmoduls 30 näher gezeigt. In dem Multifunktionsmodul 30 sind ein erstes Schaltmittel 34 und ein zweites Schaltmittel 36 vorgesehen, die in Reihe geschaltet sind. Zwischen dem ersten Schaltmittel 34 und dem zweiten Schaltmittel 36 ist ein Anschluss 33 des Gleichspannungswandlers 32 kontaktiert. Ein weiterer Anschluss 35 des Gleichspannungswandlers 32 kann über ein viertes Schaltmittel 39 mit dem Energiespeicher 40 verbunden werden. Das erste Schaltmittel 34 kann die Verbindung zwischen dem Gleichspannungswandler 32 und dem Basis-Bordnetz 10 über den Verbindungspfad 11 herstellen. Das zweite Schaltmittel 36 kann über den zweiten Pfad 23 die Verbindung zwischen dem Gleichspannungswandler 32 und dem Teilnetz 20 herstellen. Darüber hinaus ist ein drittes Schaltmittel 38 zwischen dem Basis-Bordnetz-seitigen Eingang des Multifunktionsmoduls 30, nämlich dem Verbindungspfad 11, und dem weiteren Anschluss 35 des Gleichspannungswandlers 32 vorgesehen.

Das Ausführungsbeispiel gemäß Figur 2 zeigt einen Zustand, in dem der Energiespeicher 40 aufgeladen wird. Hierzu sind das erste Schaltmittel 34 und das vierte Schaltmittel 39 geschlossen. Ein Energiefluss 42, der über einen entsprechenden Pfeil angedeutet ist, soll symbolisieren, dass das Basis-Bordnetz 10 Energie über den Gleichspannungswandler 32 hinein in den Energiespeicher 40 zur Verfügung stellt. Der Gleichspannungswandler 32 ist entsprechend ermittelter Strom- und/oder Spannungswerte im Basis-Bordnetz 10 bzw. am Energiespeicher 40 in der Lage, nach ausgewählten Ladestrategien den Energiespeicher 40 auf ein gewünschtes Spannungsniveau zu bringen. Der Energiespeicher 40 kann mit Hilfe des Multifunktionsmoduls 30 unabhängig von der Generatorspannung oder der Spannung am Energiespeicher 16 des Basis-Bordnetzes 10 geladen oder entladen werden. Dies wird sichergestellt durch die geeignete Verwendung des Gleichspannungswandlers 32, denn die Spannung am Energiespeicher 40 kann je nach Ladung stark unterschiedlich zum Basis-Bordnetz 10 sein. In der in Figur 2 gezeigten Ansteuerung der Schaltmittel 34, 36, 38, 39 ist außerdem das erste Teilnetz 20a, umfassend die sicherheitsrelevanten Verbraucher 22a, 24, direkt mit dem Basis-Bordnetz 10 gekoppelt. Somit erfolgt der Energiefluss 42 aus dem Basis-Bordnetz 10 über das erste Schaltmittel 34, das zweite Schaltmittel 36 auch in das erste Teilnetz 20a.

In Figur 3 ist nun der umgekehrte Betrieb zu Figur 2 zu sehen. Auch dort sind alle Schaltmittel 34, 36, 39 geschlossen bis auf das dritte Schaltmittel 38. Nun allerdings steuert der Gleichspannungswandler 32 den Energiefluss 42 aus dem Energiespeicher 40 sowohl über dem Verbindungspfad 11 in das Basis-Bordnetz 10 wie auch über den zweiten Pfad 23 in das Teilnetz 20a. Somit stützt der Energiespeicher 40 beide Netze 10, 20a. Dies kann beispielsweise vorkommen, wenn durch den Startvorgang des Verbrenners die Spannung kurzfristig auf beispielsweise 9V einbricht, aber sicherheitsrelevante Verbraucher 22, 24 durch diesen Spannungseinbruch nicht in Mitleidenschaft gezogen werden dürfen wie beispielsweise durch einen drohenden Reset. Andere Szenarien sind gleichzeitige Eingriffe von elektrischer Lenkung, elektronisches Stabilitätsprogramm oder elektronische Bremskraftverstärker, welche ebenfalls kurzfristig eine sehr hohe Stromdynamik verursachen können.

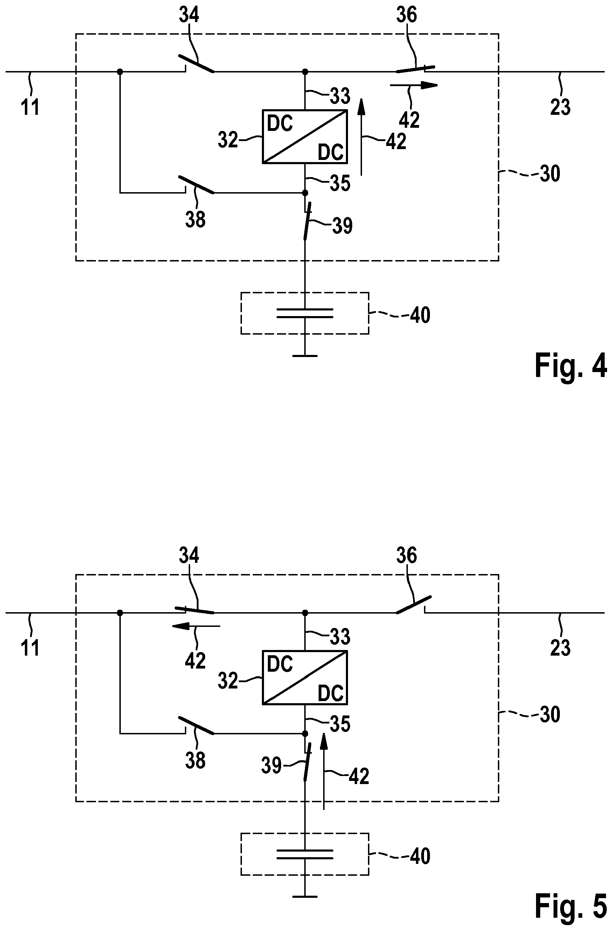

Bei der Ansteuerung gemäß Figur 4 sind nun das erste Schaltmittel 34 und das dritte Schaltmittel 38 geöffnet. Das zweite Schaltmittel 36 sowie das vierte Schaltmittel 39 sind geschlossen. In dieser Betriebsart wird über den zweiten Pfad 23 das erste Teilnetz 20a nur aus dem Energiespeicher 40 versorgt. Hierzu stellt der Gleichspannungswandler 32 die Spannungsverhältnisse so ein, dass ein Energiefluss 42 aus dem Energiespeicher 40 über den Gleichspannungswandler 32 und das geschlossene zweite Schaltmittel 36 nur in das Teilnetz 20 erfolgt. Hier ist es die Aufgabe des Energiespeichers 40, das erste Teilnetz 20a mit sicherheitsrelevanten Verbrauchern 22a, 24 über den Gleichspannungswandler 32 zu versorgen, wenn beispielsweise ein Ausfall oder eine Fehlfunktion des Basis-Bordnetzes 10 erfolgt.

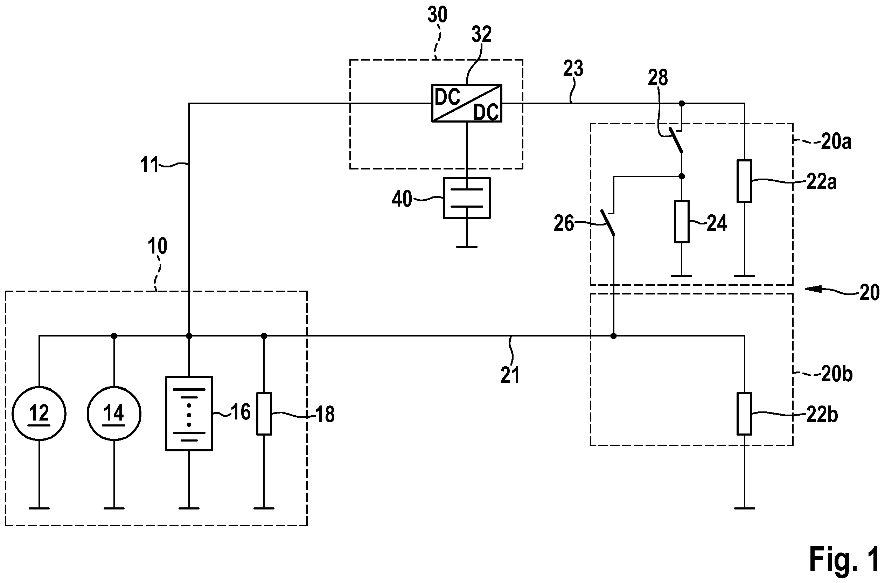

Bei dem Ausführungsbeispiel gemäß Figur 5 ist der Fall gezeigt, dass das erste Teilnetz 20a abgekoppelt werden muss beispielsweise bei einem Kurzschluss in einem Verbraucher 22a, 24 im ersten Teilnetz 20a. Hierzu sind das zweite Schaltmittel 36 und das dritte Schaltmittel 38 geöffnet. Der Energiespeicher 40 stützt über den Gleichspannungswandler 32 das Basis-Bordnetz 10 bzw. kann dies auch beispielsweise bei Ausfall des Generators 14 und/oder des Energiespeichers 16 versorgen. Hierzu ist auch das Schaltmittel 26 aus Figur 1 geschlossen und das Schaltmittel 28 geöffnet, um eine vollständige Abkopplung des ersten Teilnetzes 20a bzw. des zweiten Pfads 23 zu erreichen.

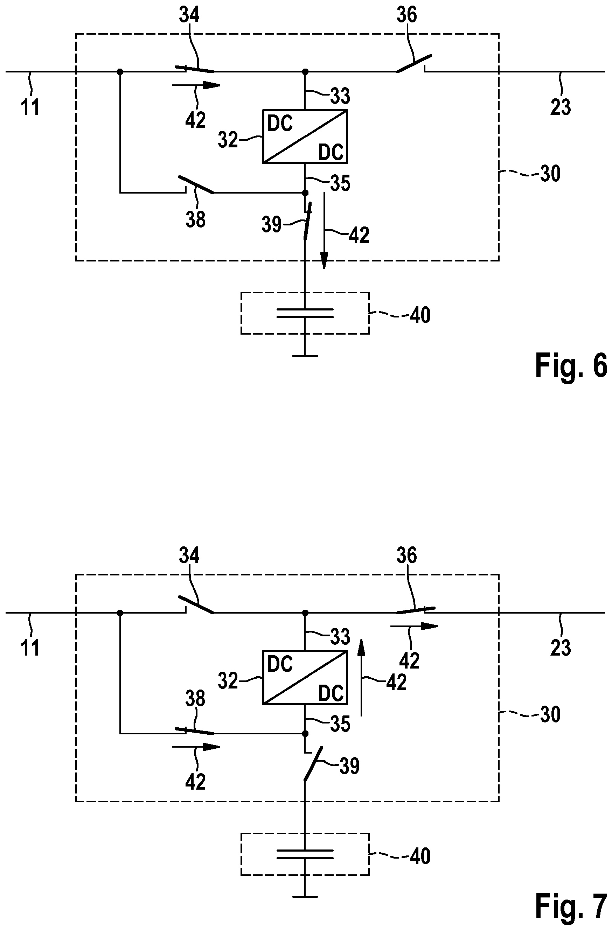

Bei dem Ausführungsbeispiel gemäß Figur 6 sind das erste Schaltmittel 34 und das vierte Schaltmittel 39 geschlossen. Das zweite Schaltmittel 36 und das dritte Schaltmittel 38 sind geöffnet. In diesem Zustand ist der zweite Pfad 23 wiederum abgekoppelt. Der Energiespeicher 40 wird vom Basis-Bordnetz 10 über den Verbindungspfad 11, das erste Schaltmittel 34, den Gleichspannungswandler 32 und das vierte Schaltmittel 39 geladen.

Bei dem Ausführungsbeispiel gemäß Figur 7 sind das erste Schaltmittel 34 und das vierte Schaltmittel 39 geöffnet. Das zweite Schaltmittel 36 und das dritte Schaltmittel 38 sind geschlossen. In dieser Ansteuerung des Multifunktionsmoduls 30 wird der zweite Pfad 23 nur aus dem Basis-Bordnetz 10 gestützt. Dies ist insbesondere für Fälle vorteilhaft, in denen im Basis-Bordnetz 10 eine Unterspannung vorliegt, der Energiespeicher 40 entladen ist, aber der zweite Pfad 23 bzw. das erste Teilnetz 20a mit sicherheitsrelevanten Verbrauchern 22a, 24 mit der Nennspannung versorgt werden muss. Somit läuft der entsprechende Energiefluss 42 aus dem Basis-Bordnetz 10 über das dritte Schaltmittel 38 und den Gleichspannungswandler 32 sowie das zweite Schaltmittel 36 in den zweiten Pfad 23.

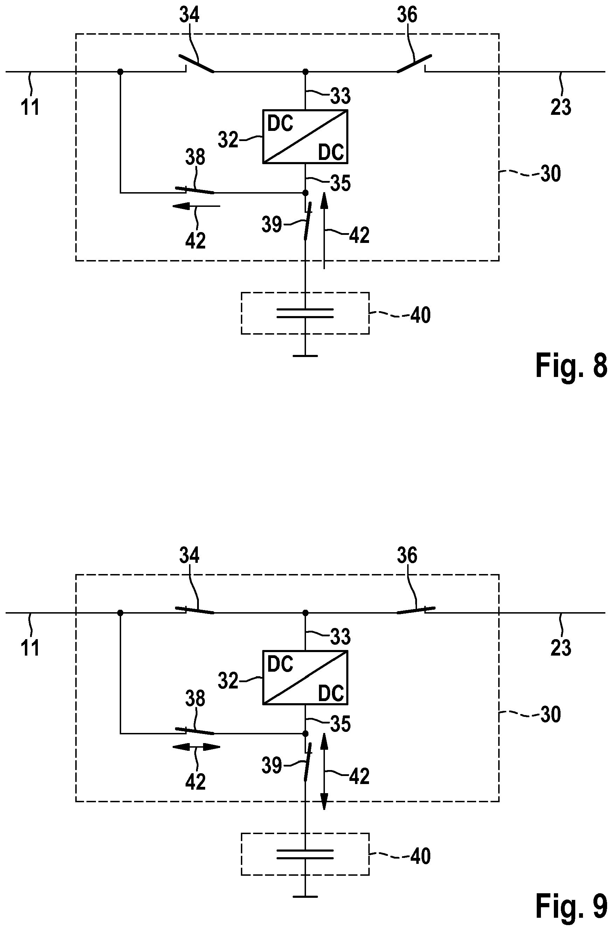

Bei der Ansteuerung des Multifunktionsmoduls 30 gemäß Figur 8 wird das Basis-Bordnetz 10 über den Verbindungspfad 11 direkt durch den Energiespeicher 40 gestützt. Hierzu sind das dritte Schaltmittel 38 und das vierte Schaltmittel 39 geschlossen. Das erste Schaltmittel 34 und zweite Schaltmittel 36 sind geöffnet. Der zweite Pfad 23 ist vom Multifunktionsmodul 30 abgekoppelt. Somit ist das Basis-Bordnetz 10 direkt mit dem Energiespeicher 40 verbunden, ohne den Gleichspannungswandler 32 dazwischen zu schalten. Diese Ansteuerung ist denkbar, wenn die Spannung des Energiespeichers 40 im Bereich des Basis-Bordnetzes 10 liegt und wie oben beschrieben kurzfristige Stromspitzen erwartet werden, welche der Energiespeicher 40 bevorzugt puffern kann, um einen Spannungseinbruch zu verhindern.

Bei der Ansteuerung des Multifunktionsmoduls 30 gemäß Figur 9 können nun sowohl das Basis-Bordnetz 10 als auch das Teilnetz 20 direkt mit dem Energiespeicher 40 gestützt werden. Hierzu sind sämtliche Schaltmittel 34, 36, 38, 39 geschlossen. Allerdings wird der Gleichspannungswandler 32 passiv geschaltet, so dass über den Gleichspannungswandler 32 kein Energiefluss 42 erfolgt. Wiederum ist diese Schaltstellung denkbar, wenn die Spannung des Energiespeichers 40 im Bereich des Basis-Bordnetzes 10 liegt und kurzfristige Stromspitzen erwartet werden, welche der Energiespeicher 40 puffern kann, um einen Spannungseinbruch zu verhindern.

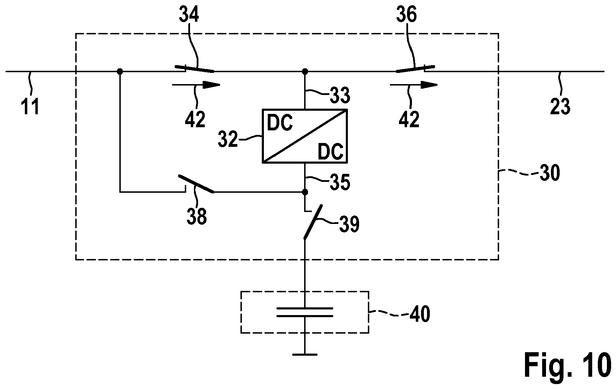

Bei der Ansteuerung der Multifunktionsmoduls 30 gemäß Figur 10 wird das erste Teilnetz 20a bzw. der zweite Pfad 23 nur aus dem Basis-Bordnetz 10 gestützt. Hierzu sind das erste Schaltmittel 34 und das zweite Schaltmittel 36 geschlossen. Das dritte Schaltmittel 38 und das vierte Schaltmittel 39 sind geöffnet. Somit stellt das Basis-Bordnetz 10 einen Energiefluss 42 in Richtung des Teilnetzes 20 zur Verfügung. Das Teilnetz 20 ist also direkt galvanisch mit dem Basis-Bordnetz 10 gekoppelt, das Multifunktionsmodul 30 bzw. der entsprechende Gleichspannungswandler 32 ist abgekoppelt. Hierzu wird der Gleichspannungswandler 32 inaktiv geschaltet, so dass kein Energiefluss 42 über den Gleichspannungswandler 32 erfolgt.

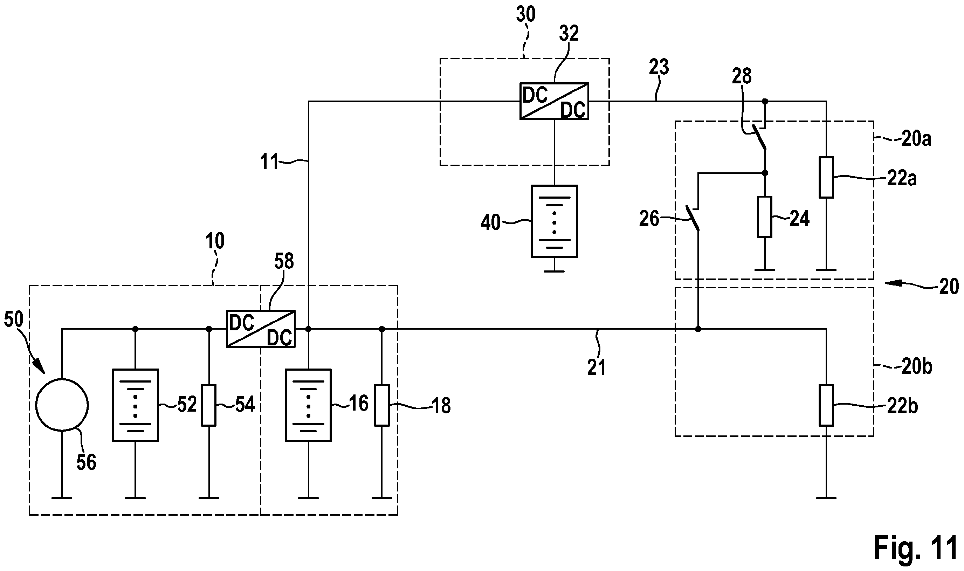

Das Ausführungsbeispiel gemäß Figur 11 ergänzt das der Figur 1 um ein Hochvolt-Bordnetz 50, das ein gegenüber dem Basis-Bordnetz 10 erhöhtes Spannungsniveau, beispielsweise 48V aufweist. Das Hochvolt-Bordnetz 50 weist einen Hochvolt-Energiespeicher 52 und beispielhaft dargestellt einen Hochvolt-Verbraucher 52 wie beispielsweise Heizung, Klimatisierung oder ähnliches auf. Außerdem kann das Hochvolt-Bordnetz 50 eine Elektromaschine 56 (z.B. für ein Elektrofahrzeug, ein Hybridfahrzeug oder ein mit einem rückspeise- und antriebsunterstützenden Elektromotor als Teil eines sog. Boost Recuperation Systems (BRS)) umfassen. Das Hochvolt-Bordnetz 50 ist über einen weiteren Gleichspannungswandler 58 mit dem Basis-Bordnetz 10 verbindbar. Das Hochvolt-Bornetz 50 kann somit ebenfalls über den Verbindungspfad 11 das Multifunktionsmodul 30 bzw. den zweiten Pfad 23 versorgen. An der Betriebsweise des Multifunktionsmoduls 30 ändert sich jedoch im Prinzip nichts.

Beispielhaft wurde die Vorrichtung am Beispiel eines 14V-Basis-Bordnetzes 10 dargestellt. Alternativ kann der Generator 14 auch durch eine sowohl motorische als auch generatorisch betreibbare elektrische Maschine ersetzt werden. Im Basis-Bordnetz 10 können darüber hinaus auch andere Komponenten vorgesehen sein, die eine andere Spannungshöhe bzw. auch eine andere Struktur besitzen. Das Teilnetz 20 wird bevorzugt auf demselben Spannungsniveau wie das Teilbordnetz 10 betrieben. Wesentlich hierbei ist, dass eine zuverlässige Versorgung der sicherheitsrelevanten Komponenten 22, 24 sichergestellt wird selbst bei einer Vielzahl oben beschriebener Fehlersituationen. Es hat sich gezeigt, dass bei dem beschriebenen Aufbau des Multifunktionsgeräts 30 eine Reihe die Qualität des Bordnetzes verbessernder Betriebszustände möglich sind, wobei in jedem Fall eine zuverlässige Versorgung der sicherheitsrelevanten Verbraucher 22, 24 sichergestellt werden kann.

Durch die beschriebene Vorrichtung wird es möglich, dass eine skalierbare und modulare Bordnetz-Topologie zur Versorgung von sicherheitsrelevanten elektrischen Verbrauchern 22, 24 realisiert wird.

Die Verbraucher werden in Verbrauchergruppen mit unterschiedlicher Sicherheitsrelevanz eingeteilt (vgl. redundante Verbraucher 22a, 22b; fehlertolerant zu versorgende Verbraucher 24, welche jedoch nicht redundant auszuführen sind). Das sicherheitsrelevante Teilnetz 20 besteht aus dem ersten Teilnetz 20a, das zumindest über das Schaltmittel 26 und das Multifunktionsmodul 30 von dem Basis-Bordnetz 10 abkoppelbar ist. Weiterhin besteht das sicherheitsrelevante Teilnetz 20 aus dem zweiten Teilnetz 20b, das über den ersten Pfad 21 immer mit dem ersten Basis-Bordnetz 10 gekoppelt ist. In diesem zweiten Teilnetz 20b sind sicherheitsrelevante Verbraucher 22b enthalten, die bevorzugt redundant ausgelegt sind.

Bevorzugt kann die Vorrichtung im Kraftfahrzeugbereich eingesetzt werden. Weiterhin ist auch ein Einsatz in anderen Technikbereichen möglich, in denen elektrische Verbraucher mit hoher Zuverlässigkeit versorgt werden müssen. Außerdem sorgt die Vorrichtung dafür, dass elektrische Speicher 16, 40 mit unterschiedlichen Spannungslagen, insbesondere bei Doppelschicht-Kondensatoren innerhalb eines Bordnetzes betrieben werden können. Außerdem wird verhindert, dass sicherheitsrelevante und spannungssensitive Verbraucher durch einen Spannungseinbruch in ihrer Funktion beeinträchtigt werden. Außerdem stellt die beschriebene Topologie eine zweikanalige elektrische Versorgung der redundanten, sicherheitsrelevanten Verbraucher 22, 24 sicher. Ebenfalls ist eine fehlertolerante Versorgung für sicherheitsrelevante Verbraucher 24, welche nur einfach vorhanden sind, möglich. Die elektrische Versorgung lässt sich im Fehlerfall flexibel konfigurieren. Außerdem können Verbraucher 22, 24 oder Verbrauchergruppen im Fehlerfall abgekoppelt werden. Der Betrieb von verschiedenen elektrischen Energiespeichern 16, 40 in einem Bordnetz kann über eine galvanische Trennung unter Verwendung des Gleichspannungswandlers 32 vorgenommen werden. Außerdem können Spannungseinbrüche flexibel kompensiert werden für spannungssensitive Verbraucher. Außerdem wird eine Stützung des Bordnetzes bei Betrieb von Hochlastverbrauchern mit hoher Stromdynamik gewährleistet. Bei den beschriebenen Schaltmitteln 26, 28, 34, 36, 38, 39 kann es sich beispielsweise um Halbleiterschalter oder konventionelle Relais handeln. Besonders bevorzugt könnten auch entsprechende Schaltelemente, welche bereits Bestandteil des Gleichspannungswandlers 32 sind, bei entsprechender Verschaltung verwendet werden, um die Kopplung von Basis-Bordnetz 10 und/oder Teilnetz 20 und/oder Energiespeicher 40 vorzunehmen. Dadurch könnten in Summe die Anzahl der elektronischen Bauelemente des Multifunktionsmoduls 30 verringert werden. Die gezeigten Figuren 2 bis 10 dienen insbesondere der Veranschaulichung der unterschiedlichen Funktionen des Multifunktionsmoduls 30.

Bei dem Energiespeicher 16 handelt es sich beispielsweise um einen konventionellen Blei-Säure-Akku, wie er üblicher Bestandteil eines Basis-Bordnetzes 10 ist. Die Charakteristik des Energiespeichers 40 hingegen ist so zu wählen, dass Spannungseinbrüche bzw. Spannungsspitzen ausgeglichen werden können. Jedoch steht eine zuverlässige Versorgung des Teilbordnetzes 20 auch durch den Energiespeicher 40 im Vordergrund. Als Energiespeicher 40 könnte bevorzugt ein Doppelschichtkondensator (DLC) oder auch ein Lithium-Ionen-Akku Verwendung finden.

Die beschriebene Vorrichtung eignet sich insbesondere in der Verwendung eines Kraftfahrzeug-Bordnetzes, sie ist jedoch hierauf nicht eingeschränkt.

## Patentansprüche

1. Vorrichtung zum Verbinden eines Basis-Bordnetzes (10) mit zumindest einem insbesondere sicherheitsrelevanten Teilnetz (20, 20a, 20b), umfassend zumindest ein erstes Schaltmittel (34) und ein zweites Schaltmittel (36), über die das Basis-Bordnetz (10) und das Teilnetz (20a) unmittelbar gekoppelt werden können, zumindest einen Gleichspannungswandler (32) mit einem ersten Anschluss (33) und einem weiteren Anschluss (35), wobei der erste Anschluss (33) zwischen dem ersten Schaltmittel (34) und dem zweiten Schaltmittel (36) elektrisch kontaktiert ist, mit einem dritten Schaltmittel (32), über das der weitere Anschluss (35) des Gleichspannungswandlers (32) mit dem Basis-Bordnetz (10) verbunden werden kann, sowie mit einem vierten Schaltmittel (39), über das der weitere Anschluss (35) des Gleichspannungswandlers (32) mit einem Energiespeicher (40) verbunden werden kann.

2. Vorrichtung nach Anspruch 1, **dadurch gekennzeichnet, dass** bei der Versorgung des Teilnetzes (20a) das zweite und das vierte Schaltmittel (36, 39) geschlossen sind, so dass ein Energiefluss von dem Energiespeicher (40) über den Gleichspannungswandler (32) in das Teilnetz (20a) erfolgt.

3. Vorrichtung nach einem der vorhergehenden Ansprüche, **dadurch gekennzeichnet, dass** zur Stützung des Teilnetzes (20a) erstes, zweites, drittes und viertes Schaltmittel (34, 36, 38, 39) geschlossen sind, wobei der Gleichspannungswandler (32) deaktiviert ist.

4. Vorrichtung nach einem der vorhergehenden Ansprüche, **dadurch gekennzeichnet, dass** zur Stützung zumindest des Teilnetzes (20a) zumindest das zweite Schaltmittel (36) und das vierte Schaltmittel (39) geschlossen sind, wobei ein Energiefluss (42) aus dem Energiespeicher (40) auch über den Gleichspannungswandler (32) in das Teilnetz (20a) erfolgt.

5. Vorrichtung nach einem der vorhergehenden Ansprüche, **dadurch gekennzeichnet, dass** eine Abkopplung des Teilnetzes (20a) erfolgt, indem das zweite Schaltmittel (36) geöffnet ist.

6. Vorrichtung nach einem der vorhergehenden Ansprüche, **dadurch gekennzeichnet, dass** die Stützung des Basis-Bordnetzes (10) über den Energiespeicher (40) erfolgt, indem das vierte Schaltmittel (39) geschlossen ist, sowie das erste Schaltmittel (34) und/oder das dritte Schaltmittel (38) geschlossen sind, so dass der Energiefluss (42) unmittelbar und/oder über den Gleichspannungswandler (32) in das Basisbordnetz (10) erfolgt.

7. Vorrichtung nach einem der vorhergehenden Ansprüche, **dadurch gekennzeichnet, dass** der Energiespeicher (40) mit dem Basis-Bordnetz (10) und/oder dem Teilnetz (20a) über den Gleichspannungswandler (32) gekoppelt ist zur Spannungsstablisierung.

8. Vorrichtung nach einem der vorhergehenden Ansprüche, **dadurch gekennzeichnet, dass** das Basis-Bordnetz (10) zumindest einen weiteren Energiespeicher (16) umfasst, dass das Teilnetz (20, 20a, 20b) zumindest ein erstes sicherheitsrelevantes Teilnetz (20a), in dem sicherheitsrelevante Verbraucher (22a, 24) angeordnet sind, und ein zweites sicherheitsrelevantes Teilnetz (20b) umfasst, in dem sicherheitsrelevante Verbraucher (22b) angeordnet sind.

9. Vorrichtung nach einem der vorhergehenden Ansprüche, **dadurch gekennzeichnet, dass** zumindest ein Schaltmittel (26, 28) vorgesehen ist zum Trennen oder Verbinden der sicherheitskritischen, einfach vorhandenen Verbraucher (24) mit dem Energiespeicher (40) und/oder dem Basisbordnetz (10).

10. Vorrichtung nach einem der vorhergehenden Ansprüche, **dadurch gekennzeichnet, dass** zumindest zwei Schaltmittel (26, 28) vorgesehen ist, über die zumindest ein im ersten sicherheitsrelevantem Teilnetz (20a) angeordneter Verbraucher (24) wahlweise mit dem Energiespeicher (40) und/oder dem Basisbordnetz (10) verbunden werden kann.

11. Vorrichtung nach einem der vorhergehenden Ansprüche, **dadurch gekennzeichnet, dass** zumindest einer der sicherheitsrelevanten Verbraucher (22a, 22b) redundant ausführt ist, wobei der eine der redundanten Verbraucher (22b) mit dem Basis-Bordnetz (10) verbunden ist, insbesondere ohne ein dazwischen angeordnetes Schaltmittel, während der andere der redundanten Verbraucher (22a) mit dem weiteren Energiespeicher (40) verbindbar ist.

## Claims

1. Apparatus for connecting a basic vehicle power supply system (10) to at least one, in particular safety-relevant, subnetwork (20, 20a, 20b), comprising at least one first switching means (34) and one second switching means (36), by means of which the basic vehicle power supply system (10) and the subnetwork (20a) can be directly coupled, at least one DC-DC voltage converter (32) having a first connection (33) and a further connection (35), wherein the first connection (33) is electrically contact-connected between the first switching means (34) and the second switching means (36), having a third switching means (32), by means of which the further connection (35) of the DC-DC voltage converter (32) can be connected to the basic vehicle power supply system (10), and having a fourth switching means (39), by means of which the further connection (35) of the DC-DC voltage converter (32) can be connected to an energy store (40).

2. Apparatus according to Claim 1, **characterized in that**, when the subnetwork (20a) is supplied with power, the second and the fourth switching means (36, 39) are closed, with the result that energy flows from the energy store (40) via the DC-DC voltage converter (32) into the subnetwork (20a).

3. Apparatus according to either of the preceding claims, **characterized in that**, in order to support the subnetwork (20a), first, second, third and fourth switching means (34, 36, 38, 39) are closed, wherein the DC-DC voltage converter (32) is deactivated.

4. Apparatus according to one of the preceding claims, **characterized in that**, in order to support at least the subnetwork (20a), at least the second switching means (36) and the fourth switching means (39) are closed, wherein energy flows (42) from the energy store (40) also via the DC-DC voltage converter (32) into the subnetwork (20a).

5. Apparatus according to one of the preceding claims, **characterized in that** the subnetwork (20a) is decoupled, by virtue of the fact that the second switching means (36) is open.

6. Apparatus according to one of the preceding claims, **characterized in that** the basic vehicle power supply system (10) is supported by means of the energy store (40), by virtue of the fact that the fourth switching means (39) is closed and the first switching means (34) and/or the third switching means (38) are closed, with the result that energy flows (42) directly and/or via the DC-DC voltage converter (32) into the basic vehicle power supply system (10).

7. Apparatus according to one of the preceding claims, **characterized in that** the energy store (40) is coupled to the basic vehicle power supply system (10) and/or the subnetwork (20a) by means of the DC-DC voltage converter (32) for the purpose of voltage stabilization.

8. Apparatus according to one of the preceding claims, **characterized in that** the basic vehicle power supply system (10) comprises at least one further energy store (16) and **in that** the subnetwork (20, 20a, 20b) comprises at least one first safety-relevant subnetwork (20a), in which safety-relevant loads (22a, 24) are arranged, and one second safety-relevant subnetwork (20b), in which safety-relevant loads (22b) are arranged.

9. Apparatus according to one of the preceding claims, **characterized in that** at least one switching means (26, 28) is provided for the purpose of isolating or connecting the safety-critical loads (24), which are present only once, from/to the energy store (40) and/or the basic vehicle power supply system (10).

10. Apparatus according to one of the preceding claims, **characterized in that** at least two switching means (26, 28) are provided, by means of which at least one load (24) that is arranged in the first safety-critical subnetwork (20a) can optionally be connected to the energy store (40) and/or the basic vehicle power supply system (10).

11. Apparatus according to one of the preceding claims, **characterized in that** at least one of the safety-relevant loads (22a, 22b) is embodied redundantly, wherein one of the redundant loads (22b) is connected to the basic vehicle power supply system (10), in particular without a switching means arranged in between, whereas the other redundant load (22a) can be connected to the further energy store (40).

## Revendications

1. Dispositif pour relier un réseau de bord de base (10) avec au moins un réseau partiel (20, 20a, 20b), notamment qui concerne la sécurité, comprenant au moins un premier moyen de commutation (34) et un deuxième moyen de commutation (36) par le biais desquels le réseau de bord de base (10) et le réseau partiel (20a) peuvent être connectés directement, au moins un convertisseur de tension continue (32) doté d'une première borne (33) et d'une borne supplémentaire (35), la première borne (33) étant mise en contact électrique entre le premier moyen de commutation - (34) et le deuxième moyen de commutation (36), comprenant un troisième moyen de commutation (32) par le biais duquel la borne supplémentaire (35) du convertisseur de tension continue (32) peut être reliée au réseau de bord de base (10), et comprenant également un quatrième moyen de commutation (39) par le biais duquel la borne supplémentaire (35) du convertisseur de tension continue (32) peut être reliée à un accumulateur d'énergie (40).

2. Dispositif selon la revendication 1, **caractérisé en ce que** lors de l'alimentation du réseau partiel (20a), le deuxième et le quatrième moyen de commutation (36, 39) sont fermés, de sorte que le flux d'énergie depuis l'accumulateur d'énergie (40) dans le réseau partiel (20a) s'effectue par le biais du convertisseur de tension continue (32).

3. Dispositif selon l'une des revendications précédentes, **caractérisé en ce que** les premier, deuxième, troisième et quatrième moyens de commutation (34, 36, 38, 39) sont fermés en vue de soutenir le réseau partiel (20a), le convertisseur de tension continue (32) étant désactivé.

4. Dispositif selon l'une des revendications précédentes, **caractérisé en ce qu'**en vue de soutenir au moins le réseau partiel (20a), au moins le deuxième moyen de commutation (36) et le quatrième moyen de commutation (39) sont fermés, un flux d'énergie (42) depuis l'accumulateur d'énergie (40) dans le réseau partiel (20a) s'effectuant également par le biais du convertisseur de tension continue (32).

5. Dispositif selon l'une des revendications précédentes, **caractérisé en ce qu'**une déconnexion du réseau partiel (20a) a lieu en ouvrant le deuxième moyen de commutation (36).

6. Dispositif selon l'une des revendications précédentes, **caractérisé en ce que** le soutien du réseau de bord de base (10) s'effectue par le biais de l'accumulateur d'énergie (40) **en ce que** le quatrième moyen de commutation (39) est fermé, ainsi que par le fait que le premier moyen de commutation (34) et/ou le troisième moyen de commutation (38) sont fermés, de sorte que le flux d'énergie (42) dans le réseau de bord de base (10) s'effectue directement et/ou par le biais du convertisseur de tension continue (32).

7. Dispositif selon l'une des revendications précédentes, **caractérisé en ce que** l'accumulateur d'énergie (40) est connecté au réseau de bord de base (10) et/ou au réseau partiel (20a) par le biais du convertisseur de tension continue (32) en vue de la stabilisation de la tension.

8. Dispositif selon l'une des revendications précédentes, **caractérisé en ce que** le réseau de bord de base (10) comprend au moins un accumulateur d'énergie (16) supplémentaire, **en ce que** le réseau partiel (20, 20a, 20b) comprend au moins un premier réseau partiel (20a) qui concerne la sécurité, dans lequel sont disposés des consommateurs (22a, 24) qui concernent la sécurité, et un deuxième réseau partiel (20b) qui concerne la sécurité dans lequel sont disposés des consommateurs (22b) qui concernent la sécurité.

9. Dispositif selon l'une des revendications précédentes, **caractérisé en ce qu'**au moins un moyen de commutation (26, 28) est prévu pour déconnecter ou pour relier les consommateurs (24) essentiels pour la sécurité, simplement présents, de/à l'accumulateur d'énergie (40) et/ou du/au réseau de bord de base (10).

10. Dispositif selon l'une des revendications précédentes, **caractérisé en ce qu'**il existe au moins deux moyens de commutation (26, 28), par le biais desquels au moins un consommateur (24) disposé dans le premier réseau partiel (20a) qui concerne la sécurité peut être relié, au choix, à l'accumulateur d'énergie (40) et/ou au réseau de bord de base (10).

11. Dispositif selon l'une des revendications précédentes, **caractérisé en ce qu'**au moins l'un des consommateurs (22a, 22b) qui concernent la sécurité est réalisé de manière redondante, l'un des consommateurs (22b) redondants étant relié au réseau de bord de base (10), notamment sans un moyen de commutation interposé, alors que l'autre consommateur (22a) redondant peut être relié à l'accumulateur d'énergie (40) supplémentaire.
